# EUROPEAN PATENT SPECIFICATION

(11) **EP 3 487 811 B1**
(45) Date of publication and mention of the grant of the patent: **21.08.2024**
(21) Application number: 17740369.8
(22) Date of filing: 12.07.2017
(51) Int. Cl.: C01F 7/34

(54) **SOLUTION CONTAINING ALUMINIUM AND AMMONIUM IONS SERVING AS A PRECIPITATION MEDIUM FOR ALUMINIUM HYDROXIDES**
LÖSUNG MIT ALUMINIUM- UND AMMONIUMIONEN ALS FÄLLUNGSMITTEL FÜR ALUMINIUMHYDROXIDE
SOLUTION CONTENANT DES IONS ALUMINIUM ET AMMONIUM SERVANT DE MILIEU DE PRÉCIPITATION POUR HYDROXYDES D'ALUMINIUM

(30) Priority: 20.07.2016 SI 201600110
(43) Date of publication of application: 29.05.2019
(73) Proprietor: Valls d.o.o., 5220 Tolmin (SI)
(72) Inventor: DAKSKOBLER, Ales, 1000 Ljubljana (SI)
(74) Representative: Mewburn Ellis LLP
(86) International application number: PCT/EP2017/067639
(87) International publication number: WO 2018/015257

(56) References cited:
- US-A- 2 867 588
- US-A- 3 096 154
- S. FUKUMOTO ET AL, JOURNAL OF MATERIALS SCIENCE, vol. 35, no. 11, 1 January 2000 (2000-01-01), pages 2743 - 2748, XP055152387, ISSN: 0022-2461, DOI: 10.1023/A:1004718329003

## Description

### Technical Field

The invention pertains to the technical field of the use of aluminate solutions, particularly aqueous solutions, which contain aluminium ions, complexes or other precursors for precipitating amorphous or various crystalline aluminium hydroxides in the form of films, to wit, coatings or particles.

### Description of the Technical Problem

The present invention relates to solving the technical problem of complex and environment-unfriendly synthesis procedures for preparation of exceptionally pure, amorphous or various crystalline aluminium hydroxides in the form of films, to wit, coatings or particles. The synthesis paths usually require the usage of aluminium alkoxides in combination with aggressive organic solvents. An additional drawback of the otherwise nature-friendlier aqueous approaches is represented by the lengthy processes of neutralisation of aqueous alluminate solutions by means of acids or bases, which results in a limited degree of purity and control of the morphology of the precipitated aluminium hydroxides. Both methods usually require the use of environment-unfriendly surfactants along with the lengthy and energetically demanding hydrothermal treatments. Thus, there is an additional obstacle of removing the reactants remaining in the precipitate and in the mother solution - i.e. surfactants, cations and anions from metal salts, bases and/or acids - which negatively limit the morphological evolution of the precipitated products and at the same time, require additional, usually not effective purification steps of the products. S. Fukumoto et al., J. MAT. SCIENCE, vol. 35, 2000, pages 2743-2748 discloses a solution containing aluminium (III) and ammonium ions having a pH value of 9 to 12, where the concentration of ammonium ions [NH4+] in the solution is within 0.5 and 10 ppm. It contains also AIN which did not react with water.

### Solution to the Technical Problem

The present invention provides, in a first aspect, an aqueous aluminate solution consisting of aluminium, ammonia, and ammonium ions, NH₄⁺, suitable for use as a precipitation medium for aluminium hydroxides, the solution having a pH value between 9 and 12, where the concentration of ammonium ions ([NH₄+]) in the solution is within the range from one quarter of the concentration of aluminium (III) in the solution to the equilibrium solubility of ammonia in the solution.

As used herein, the term "aluminate solution" refers to a solution containing aluminium III (Al³⁺) ions, in any form. For example, the aluminate solution may contain mono- or poly-nuclear complexes of the aluminium III ion.

The aluminium III ions is present in a concentration of, for example, 0.0001 mol/l to 0.02 mol/l.

Suitably the concentration may be 0.0005 to 0.01 mol/l, for example 0.001 to 0.01 mol/l.

The present aluminate solution also contains ammonium ions, NH₄⁺.

The solvent is water. That is, the present solutions are suitably aqueous. The solutions can therefore contain combinations of Al³⁺, NH₃, NH₄⁺, OH⁻, H₃O⁺ and H₂O species, for example. There are no sulfate (SO₄²⁻), nitrate (NO₃⁻) or sodium (Na⁺) ions present in the solution, for example.

Only combinations of Al³⁺, NH₃, NH₄⁺, OH⁻, H₃O⁺ and H₂O species are contained in the solution. That is the solution contains only ions and complexes derived from a mixture of water, NH₃, NH₄⁺ and Al³⁺. The particular complexes present may depend on, for example, the coordination number of the aluminium cation and the pH of the solution.

Mono-nuclear aluminium complexes are generally fairly stable and experimentally detected. Poly-nuclear species, while they may be present, are generally unstable, short lived or present only in low concentrations, and are hard to detect.

The set-out technical problem may be solved by a simple, chemically benign single-step or the so-called "single-pot" synthesis path via precipitation of stable, mildly alkaline aqueous aluminate solution as it requires neither adding or combining several reactants nor hydrothermal treatments. The present invention envisages time-dependent tempering of the aluminate solution, for example from 1 minute to 72 hours, at the temperature from 5 °C to the boiling point, during which the precipitation of amorphous as well as of various crystalline aluminium hydroxides takes place in the form of films, to wit, coatings or particles, depending on the tempering conditions of the solution.

As used herein 'tempering' of a solution refers to heating (or holding) the solution at a given temperature for a given time, suitably under ambient pressure and air composition. For example, in tempering as used herein there is suitably no addition of further reactants. Tempering may be carried out prior to or even during precipitation.

By selection and control of the tempering conditions, different aluminium hydroxides can be precipitated. They can be precipitated as powders or as coatings, suitably on hydrophilic surfaces.

The invention provides an aqueous aluminate solution, a precipitation medium which has a pH value between 9 and 12 or the one reached at the equilibrium solubility of ammonia in water, contains aluminium and ammonium ions. The latter contains neither any other anions nor cations originating in aluminium salts of acids and bases, it further contains neither environment-unfriendly organic solvents nor surfactants. Consequently, the precipitated aluminium hydroxides are of exceptional purity, not requiring purification while the remaining mother solution is harmless to environment.

As explained above, the present aluminate solution contains, for example, the [Al(OH)₄]⁻ and NH₄⁺ species, in an aqueous solvent.

As described herein, the aluminate solution containing aluminium and ammonium ions is, as long as it is air-tight sealed, completely stable. Having been opened, to wit, exposed to the environment (air), it becomes a precipitation medium for the synthesis of films, to wit, coatings or dispersed (monomodal) particles of aluminium hydroxides via a facile, chemically benign synthesis path composed of 2 steps: i) an incubation period during which the pH of the aluminate solution is being continuously decreased to the final value of 6 to 9 due to the (forced) ammonia exclusion (that is, ammonia leaving the solution and entering the air), CO₂ dissolution (that is, CO₂ from the air dissolving in the solution) and/or condensation reactions of aluminium species, and ii) subsequent precipitation of aluminium hydroxides.

During the incubation period, for example, the chemical potential between dissolved ammonia in water and the one in the gaseous state above water needs is (being) established at any time, which can lead to an eventual continuous evaporation of ammonia from water to air.

It has been found that the pH drop becomes more rapid (and so the precipitation of the solid phases), when the aluminate solution is completely open to ambient air instead being covered with glass, for example, while not air-tight sealed. Thus, in the former case, however, the CO₂ dissolution and/or ammonia equilibration should be more pronounced.

During the incubation period the ongoing reactions of neutralization and condensation of mononuclear aluminium specie, [Al(OH)₄]⁻, provoke a relatively rapid precipitation of amorphous aluminium hydroxides gel, mesocrystals of aluminium trihydroxides (bayerite, gibbsite, nordstrandite) or self-assembled, mesoporous aluminium monohydroxides (boehmite) exhibiting high surface area depending on the ageing conditions of the ammoniacal aluminate solution.

### Invention Background

The available literature lacks data on the preparation of disordered (amorphous) and ordered (crystalline) fine-grained and finely-porous hierarchical structures of aluminium hydroxides by employing facile, energetically sustainable and time efficient syntheses.

The synthesis paths usually require the use of alkoxides the preparation of which is technologically demanding and environment-unfriendly since this type of precursors are prepared by means of petroleum derivatives requiring at the same time the use of aggressive organic solvents. There are water-based synthesis paths known - neutralisation processes of aqueous aluminate solutions which are, however, complex and lengthy. The biggest problem of the neutralisation processes of the aqueous aluminate solutions are constituted by the remains of cations and anions from metal salts, bases and/or acids which limit negatively the evolution of the morphology of the precipitates. This is why the precipitates need additional steps of purification. Furthermore, both set-out synthesis paths, aqueous and non-aqueous, frequently demand the use of surfactants to tailor the growth of the crystals due to the increase of the specific surface of the precipitated hydroxides and time-consuming hydrothermal processes.

The chemistry of trivalent cations is complex and so is the one containing aluminium cation in aqueous solution, due to the formation of the numerous mono- and polymeric species, solid phases and polymorphs. It is well known that the type of species is very much dependent on total aluminium concentration in the solution, on the ionic strength of the solution (the presence of other cations), on the temperature and the pH of the solution.

In a mildly acidic medium (pH < 3) the Al³⁺ ions form an aluminate complex containing six water molecules (hexaaquo complex), [Al(OH₂)₆]³⁺, forming an octahedron (coordination 6). The existence of this aluminium complex was confirmed by using proton nuclear magnetic resonance (NMR) (Fratiello et al. J Chem Phys 48 3705 (1968)). With the increase in pH of the aluminate solution, the complex [Al(OH₂)₆]³⁺ hydrolizes progressively. The formation of the soluble products in the form of hydrated aluminium mononuclear complexes is reversible and proceeds according to the following scheme:

[Al(H₂O)₆]³⁺ ↔ [Al(H₂O)₅(OH)]²⁺ ↔ [Al(H₂O)₄(OH)₂]⁺ ↔ [Al(H₂O)(OH)₃]⁰ ↔ [Al(OH)₄]⁻

At pH values of the solution higher than about 4 the aluminium monocationic species [Al(H₂O)₅(OH)]²⁺ and [Al(H₂O)₄(OH)₂]⁺ are formed. At pH values higher than about 7 the aluminium complex undergoes a transition from coordination 6 to 4. An aluminium anionic species, [Al(OH)₄]⁻, is formed in the shape of tetrahedron. In the case of a sufficiently high concentration in the aluminate solution having a pH value between about 5 and 9, the hydrolysis of the aluminium species (cationic and anionic) leads to the formation of the neutral species [Al(H₂O)(OH)₃]⁰ which is responsible for the precipitation of aluminium hydroxides.

It is of course apparent that at certain pHs a mixture of species and coordinations will be present. For example, at pH 5-6 a small amount of [Al(H₂O)(OH)₃]⁰ is present along with [Al(H₂O)₅(OH)]²⁺.

So, in an aluminate solution with a pH value of 9 to 12, aluminium III is predominantly present in the form of [Al(OH)₄]⁻, with the Al³⁺ ion in coordination 4.

The precipitation of the hydroxide initiates when the suitable [OH⁻]/[Al³⁺] ratio in the solution is obtained. This is at the point when the concentration of the neutral precursor specie, [Al(OH)₃(OH₂)]⁰, is high enough for the nucleation of the hydroxide to occur. Numerous crystal structures of aluminium hydroxides varying in structure and morphology can be precipitated depending on the synthesis conditions (solvent type, concentration, pH and temperature) and the synthesis method employed (sol-gel route, addition of base into aluminum salt solution or addition of aluminium salt into base, thermo-hydrolysis and using hydrothermal procedure). Such various synthesis methods of aluminium hydroxides are generally understood.

During the reactions of condensation of aluminium species leading to nucleation of solid phases - hydroxides, [OH]⁻ is always involved, ultimately affecting the pH of the solution. Below several schemes are presented for better understanding of reactions taking place prior to nucleation.

[Al(OH)₄]⁻ + H₂O → [Al(OH)₃(OH₂)]⁰ + OH⁻

Here, an aluminium mononuclear cationic species (coordinaton 4) is transformed to a neutral mononuclear species upon (self-)acidification. The latter possess coordination 6.

This neutral mononuclear specie (coordination 6) can form a critical nucleus for further condensation reactions and nucleations which generate species such as diaspore (αAlOOH) and boehmite (yAIOOH). This can lead to, for example, precipitation of boehmite.

With tetramers, a critical nucleus can form and through rapid olation and oxolation swift nucleation boehmite is generated.

Of course similar pathways exist for precipitation of, for example, the trihydroxides of aluminium where the stacking of octaeders is slightly different.

Some of the mentioned basic synthesis procedures during which the neutralisation and condensation of the mononuclear species, which lead to the hydroxide precipitation, occur, are briefly described hereinafter.

**Hydroxylation by adding of base into aluminium salt solution.** Continuous addition of base, i.e. ammonia or hydroxides of sodium, potassium, lithium, etc. into the aluminium salt solution, i.e., nitrate, chloride or sulfate, at the pH value around 6 to 7, causes the immediate precipitation of translucent amorphous gel. Depending on the pH and the temperature the resulting gel is unstable and recrystallizes more or less rapidly into different crystalline phases; at pH 6 to 7 it leads to γ-AIOOH (boehmite), while at pH 5 or 8 the aluminium trihydroxides (bayerite or gibbsite), Al(OH)₃, are formed. From the point of view of a larger, industrial use scale, an acidic solution of aluminium ion at around pH of 4 is prepared, and then Al³⁺ is partially neutralized with addition of base salt - aluminum oxychloride salts and hexamethilen tetra-amine salts. With temperature the amine is decomposed and the ammonia released neutralizes chloride ions.

**Hydroxylation by adding of aluminium salt solution into base at the constant pH.** Under the conditions where the pH of the solution is somewhere between 8 and 10, hydroxylation and consequently, the precipitation, is immediate and complete. The crystalization kinetics is extremely fast. In most of the cases, the precipitate is boehmite. For these purposes, the water soluble salts of aluminium acids, such as sulphates, nitrates or chlorides, and alkaline metal aluminates such as sodium or potassium aluminates, are used. In both above mentioned relatively complex synthesis procedures of the neutralization of aluminate solutions the residual cations of the used salts are problematic. In the case of nitrate synthesis path, the residual nitrates can be eliminated by using calcination steps, which can jeopardize the surface properties of the precipitated aluminium hydroxide powders. Moreover, nitrate residuals in mother solution in the form of nitric acid pose a technological problem. On the other hand, the sulphate synthesis procedure is also problematic, since high covalent nature of the SO₄²⁻ prevents its removal during ageing and filtration of the precipitate and it further affects the control of the morphological evolution of the precipitated aluminium hydroxides. With the exception of the increased corrosive affinity-related problematics of residual chloride ions, the chloride synthesis procedure is superior in comparison with the sulphate one since it enables the precipitation of a wider palette of aluminium hydroxides.

**Thermohydrolysis.** The policationic Al³⁺ complexes are, as mentioned above, stable in acidic environment at room temperature. The hydroxylation of these complexes in water can be also triggered with heat treatment. Thus, when the acidic aluminium salt solution is heated to 80 or 100 °C, it causes the precipitation of boehmite. However, analogous to the hydroxilation involving the addition of aluminium salt into the base at the constant pH, the presence of nitrates, chlorides and sulphates in the mother solution is problematic.

### Invention-related task and objective

A further aspect of the invention is the use of the present (suitably aqueous) aluminate solution containing aluminium and ammonium ions, which is stable when airtight sealed, as a precipitation medium for the synthesis of amorphous or various crystalline aluminium hydroxides in the form of films, to wit, coatings or dispersed (monomodal) particles, depending on the tempering conditions of the aluminate solution.

Following the invention, the task is solved by a very simple, chemically benign single-step or the so-called "single-pot" synthesis path via precipitation of stable, mildly alkaline aluminate solution as it requires neither adding or combining several reactants nor hydrothermal treatments. For example there is provided time-dependent tempering of the aqueous aluminate solution, from 1 minute to 72 hours, at the temperature from 5 °C to the boiling point, during which precipitation of either amorphous and various crystalline aluminium hydroxides takes place in the form of films, to wit, coatings or particles, depending on the solution tempering conditions.

The aqueous aluminate solution that contains aluminium and ammonium ions and has a pH value between 9 and 12, individuated by the concentration of ammonium ions ([NH₄⁺]) in the solution is in the range from one quarter of the concentration of aluminium ions ([Al³⁺]) in the solution through to equilibrium solubility of the ammonia in the solution. The concentration of aluminium ions ([Al³⁺]) in the aluminate solution is in the range of 0.0001 mol/l to 0.02 mol/l.

Having been opened, to wit, exposed to the environment the aluminate solution becomes a precipitation medium for the synthesis of films, to wit, coatings or dispersed (monomodal) particles of aluminium hydroxides.

Thus, the aluminate solution can be used as a precipitation medium for the synthesis of films from amorphous aluminium hydroxides gel on the surface when the tempering of the solution up to 40 °C between 4 to 72 hours is employed. The aluminate solution can, for example, be used as a precipitation medium for the:
i) synthesis of coatings from crystalline aluminium trihydroxides (bayerite, gibbsite, nordstrandite) grown on surfaces when the tempering of the solution from 5 to 80 °C for a period of 1 to 72 hours is employed,
ii) synthesis of coatings from crystalline aluminium monohydroxide (boehmite) grown on surfaces when the tempering of the solution from 40 °C to its boiling point, or a little above its boiling point, for example the boiling point + 10°C, for a period of 1 minute to 72 hours is employed,
iii) synthesis of dispersed (monomodal) particles of aluminium trihydroxides (bayerite, gibbsite, nordstrandite) when the tempering of the solution from 5 to 80 °C for a period of 1 to 72 hours is employed, and
iv) synthesis of dispersed (monomodal) particles of aluminium monohydroxide (boehmite) when the tempering of the solution from 40 °C to its boiling point, or a little above its boiling point, for example the boiling point + 10°C, for a period of 1 minute to 72 hours is employed.

Where conditions are chosen such that multiple different species may be precipitated (for example in the areas of overlap between the various conditions set out above), they can be selectively harvested based, for example, on the time at which they form. For example, monohydroxides tend to form first, followed by trihydroxides. This enables both mixed and selective hydroxide precipitation depending on the choice of conditions (temperature and time).

The invention is hereinafter described in more detail with several illustrative examples. In each example, the solvent of the aluminate solution is water. In each example the starting pH value of the aluminate solution is between 9 and 12, and the concentration of ammonium ions ([NH₄⁺]) in the solution is within the range from one quarter of the concentration of aluminium (III) in the solution to the equilibrium solubility of ammonia in the solution.

**Illustrative example 1. The precipitation of a dense, amorphous film of aluminium hydroxides gel on the surface of a titanium metal.** The titanium metal alloy (Ti 6AI-4V) prepared by the selective laser melting was used as the substrate, which was previously ground and polished using diamond suspension (3 µm). The substrate was 1 mm thick having a diameter of 10 mm. The substrate was immersed in 10 ml of aluminate solution containing aluminium and ammonium ions. The pH of the solution before opening was 10.40, while [NH₄+] and [Al³⁺] were 5.0 and 5.2 mmol/l, respectively. The processes of incubation and precipitation at room temperature lasted for 12 hours. A thick, dense film of amorphous aluminium hydroxides gel was precipitated on the substrate surface. The coated substrate was then rinsed by deionized water and oven-dried for 2 hours at 110 °C. After drying, the coated substrate was thermally treated with heating in a resistance oven at the air temperature of 500 °C, where the calcination of the dehydration of the amorphous aluminium hydroxides gel into alumina occurred. The heating time at this temperature was 1 hour. Measurements with the contact profilometer revealed that the thickness of the precipitated and calcinated alumina film was 1 micrometer.

**Illustrative example 2. The precipitation of self-assembled, mesoporous aluminium monohydroxides (boehmite) particles exhibiting high surface area on the surface of cordierite.** The surface of cordierite, magnesium iron aluminium cyklosilicate, in the form of a porous honeycomb with side length of 15 mm, was used as the substrate surface. The substrate was immersed in 25 ml of aluminate solution containing aluminium and ammonium ions. The pH of the solution before opening was 10.60, while [NH₄+] and [Al³⁺] were 3.3 and 3,0 mmol/l, respectively. The solution was brought to boiling within 5 minutes by using a hot plate heater. After 10 minutes of boiling of the solution, which corresponded to the incubation period during which the condensation reactions of aluminium species took place, the solution became turbid. The cordierite substrate, on the surface of which self-assembled, mesoporous aluminium monohydroxide (boehmite) particles exhibiting high surface area were deposited, was then washed with deionized water and oven-dried for 2 hours at 110 °C. After drying, the coated substrate was thermally treated in a resistance oven at the air temperature of 500 °C.

**Illustrative example 3. The precipitation of mesocrystals, somatoid particles of aluminium trihydroxides, bayerite, grown normal to the surface of densely sintered alumina ceramics.** Densely sintered disk of α-alumina, corundum, having a diameter of 15 mm and 2 mm in height was used as the substrate surface. The surface was previously polished by metallographic procedures, i.e., on diamond plates and SiC papers and, finally, polished with diamond particles (3 µm) suspension. The substrate was immersed in 35 ml of aluminate solution containing aluminium and ammonium ions. The pH of the solution before opening was 10.10, while [NH₄+] and [Al³⁺] were 2.4 and 2.3 mmol/l, respectively. The solution was then heated to 50 °C. The time needed for the incubation period during which the condensation reactions of aluminium species took place and the precipitation to occur at this temperature was between 2 and 12 hours. The substrate was afterwards rinsed with deionized water and oven-dried for 2 hours at 110 °C. A somatoid-like, mesocrystals of aluminium trihydroxide, bayerite, 10 microns in length and 3 microns thick, were grown perpendicularly to the substrate surface.

**Illustrative example 4. The precipitation of self-assembled, mesoporous aluminium monohydroxide (boehmite) particles exhibiting high surface area.** A 100 ml of aluminate solution containing aluminium and ammonium ions was brought to boiling by using a hot plate heater. The pH of the solution before opening was 10.60, while [NH₄+] and [Al³⁺] were 3,3 and 3.0 mmol/l, respectively. After 10 minutes of boiling of the solution it became turbid. The so formed colloid suspension was filtrated by using cellulose-based filter paper having a pore size of 0.2 microns and the filter cake was washed with 2-propanol. The washed filter cake containing self-assembled, mesoporous particles of crystalline aluminium oxyhydroxide, boehmite, was oven-dried for 6 hours at 110 °C. After drying, the so obtained powder was thermally treated with heating in a resistance oven at the air temperature of 500 °C with heating rate 10 °C/min for 1 hour, where the topotactic transformation of the AIOOH (boehmite) to γ-Al₂O₃ occurred without substantial change in the morphology of the powder. The BET surface area of 265 m²/g and the total pore volume of 0.6 cm³/g with the average pore size of 2 nm were measured.

## Claims

1. An aqueous aluminate solution consisting of aluminium (III), ammonia, and ammonium ions, NH₄⁺, suitable for use as a precipitation medium for aluminium hydroxides, the solution having a pH value of 9 to 12, where the concentration of ammonium ions ([NH₄+]) in the solution is within the range from one quarter of the concentration of aluminium (III) in the solution to the equilibrium solubility of ammonia in the solution, and the concentration of aluminium (III) in the solution is in the range of 0.0001 mol/l to 0.02 mol/l.

2. The solution of claim 1, where the concentration of aluminium (III) in the solution is in the range of 0.001 mol/l to 0.02 mol/l.

3. Use of the solution of claim 1 or claim 2 as a precipitation medium for the synthesis of films, to wit, coatings or dispersed (monomodal) particles of aluminium hydroxides.

4. A method of synthesis of crystalline aluminium monohydroxide on a surface using the solution of claim 1 or claim 2, the method comprising the steps of
(i) contacting the solution and the surface to be coated; and
(ii) tempering the solution at 40 °C to its boiling point for a period of 1 minute to 72 hours.

5. A method of synthesis of dispersed (monomodal) particles of crystalline aluminium monohydroxide using the solution of claim 1 or claim 2, the method comprising the step of tempering the solution at 40 °C to its boiling point for a period of 1 minute to 72 hours.

## Patentansprüche

1. Wässrige Aluminat-Lösung, die aus Aluminium(III), Ammoniak und Ammoniumionen, NH₄⁺, besteht und zur Verwendung als Ausfällungsmedium für Aluminiumhydroxide geeignet ist, wobei die Lösung einen pH-Wert von 9 bis 12 aufweist, wobei die Konzentration von Ammoniumionen ([NH₄+]) in der Lösung innerhalb des Bereichs von einem Viertel der Konzentration von Aluminium(III) in der Lösung bis zur Gleichgewichtslöslichkeit von Ammoniak in der Lösung liegt und wobei die Konzentration von Aluminium(III) in der Lösung im Bereich von 0,0001 mol/l bis 0,02 mol/l liegt.

2. Lösung nach Anspruch 1, wobei die Konzentration von Aluminium(III) in der Lösung im Bereich von 0,001 mol/l bis 0,02 mol/l liegt.

3. Verwendung einer Lösung nach Anspruch 1 oder Anspruch 2 als Ausfällungsmedium für die Synthese von Filmen, d. h. Beschichtungen, oder von dispergierten (monomodalen) Teilchen von Aluminiumhydroxiden.

4. Verfahren zur Synthese von kristallinem Aluminiummonohydroxid auf einer Oberfläche unter Verwendung einer Lösung nach Anspruch 1 oder Anspruch 2, wobei das Verfahren die folgenden Schritte umfasst:
(i) das In-Kontakt-Bringen der Lösung und der zu beschichtenden Oberfläche; und
(ii) das Temperieren der Lösung auf 40 °C bis zu ihrem Siedepunkt für einen Zeitraum von 1 min bis 72 h.

5. Verfahren zur Synthese von dispergierten (monomodalen) Teilchen von kristallinem Aluminiummonohydroxid unter Verwendung einer Lösung nach Anspruch 1 oder Anspruch 2, wobei das Verfahren den Schritt des Temperierens der Lösung auf 40 °C bis zu ihrem Siedepunkt für einen Zeitraum von 1 min bis 72 h umfasst.

## Revendications

1. Solution d'aluminate aqueuse constituée d'aluminium (III), d'ammoniac et d'ions ammonium, NH₄⁺, appropriée pour être utilisée comme milieu de précipitation pour des hydroxydes d'aluminium, la solution présentant une valeur de pH de 9 à 12, dans laquelle la concentration d'ions ammonium ([NH₄+]) dans la solution est dans la plage d'un quart de la concentration d'aluminium (III) dans la solution à la solubilité d'équilibre d'ammoniac dans la solution, et la concentration d'aluminium (III) dans la solution est dans la plage de 0,0001 mol/l à 0,02 mol/l.

2. Solution selon la revendication 1, dans laquelle la concentration d'aluminium (III) dans la solution est dans la plage de 0,001 mol/l à 0,02mol/l.

3. Utilisation de la solution selon la revendication 1 ou la revendication 2 comme milieu de précipitation pour la synthèse de films, à savoir des revêtements ou des particules dispersées (monomodales) d'hydroxydes d'aluminium.

4. Procédé de synthèse de monohydroxyde d'aluminium cristallin sur une surface en utilisant la solution selon la revendication 1 ou la revendication 2, le procédé comprenant les étapes consistant à
(i) mettre en contact la solution et la surface à revêtir ; et
(ii) tremper la solution à 40°C jusqu'à son point d'ébullition pendant une période de 1 minute à 72 heures.

5. Procédé de synthèse de particules dispersées (monomodales) de monohydroxyde d'aluminium cristallin en utilisant la solution de la revendication 1 ou de la revendication 2, le procédé comprenant l'étape de trempe de la solution à 40°C jusqu'à son point d'ébullition pendant une période de 1 minute à 72 heures.
